Europäisches Patentamt

European Patent Office

Office européen des brevets

(19)

(11) Publication number: **0 328 326**
**A1**

## (12) EUROPEAN PATENT APPLICATION

(21) Application number: **89301111.4**

(22) Date of filing: **03.02.89**

(51) Int. Cl.⁴: **H 01 R 13/658**

(30) Priority: **06.02.88 GB 8802722**

(43) Date of publication of application:
**16.08.89 Bulletin 89/33**

(84) Designated Contracting States:
**BE CH DE FR IT LI NL**

(71) Applicant: **BOWTHORPE-HELLERMANN LIMITED**
**Gatwick Road**
**Crawley West Sussex RH10 2RZ (GB)**

(72) Inventor: **Neely Nicholas Henry**
**14 Drake Road, Off Coombe Road**
**Bovey tracey, Devon (GB)**

(74) Representative: **Gibson, Stewart Harry et al**
**URQUHART-DYKES & LORD Business Technology**
**Centre Senghennydd Road**
**Cardiff CF2 4AY South Wales (GB)**

(54) **Cable screening.**

(57) A screen is applied to a cable or bundle of cables in a cable harness by recovering a heat shrinkable tube about the cable or bundle of cables, the tube carrying a layer of electrically conductive material. The tube is formed by applying the conductive material layer 12 onto the outer surface of an inner tube 10, then applying an outer tube 14 and finally expanding the structure to form a recoverable tubular article.

FIG. 1

## Description

## CABLE SCREENING

This invention relates to a method for screening cables and to tubing for use in this method.

There is an increasing demand for hand-built cable assemblies, or cable harnesses, to be provided with screens for protection against EFI and RFI. Usually one or more preformed braided sleeves are applied to form the required screen and then a heat shrinkable tube is applied and recovered about the screen to provide an environmental seal. A preformed braid has a predefined screening performance and cover factor only when the diameter of the cable harness to which it is applied has the same diameter as the former around which the braid was originally made. If the cable harness is of any other diameter, then the screening performance cannot be determined without measurements.

We have now devised an improved method for applying a screen to a cable or to a bundle of cables.

In accordance with this invention, there is provided a method of applying a screen to a cable or bundle of cables, comprising applying a heat shrinkable tube around the cable or bundle of cables, which tube carries a layer of electrically conductive material, and then applying heat to said tube to cause it to recover and embrace the cable or bundle of cables.

Our U.K. patent specification No. 2 188 197 describes and claims a heat shrinkable tubular article provided with an electrically conductive lining on its inner surface, which lining is formed of a continuous coating of a metal which deforms without cracking during recovery of the article so that after recovery the coating will remain continuous and adhered to said surface of the article. The metal may be such as to exhibit a broad melting point so that the metal softens, without fully melting, at the recovery temperature of the tubular article. Thus the metal softens and does not significantly impede recovery of the tubular article but instead deforms to accommodate the shrinking of the article.

Such a tubular article may be used in the method in accordance with this invention. The metal may for example comprise any of the alloys disclosed in our U.K. specification No. 2 188 197, e.g. an alloy of bismuth, lead and tin (e.g. in proportions of 40-60% bismuth, 20-30% lead, 20-30% tin) or an alloy of indium and bismuth (e.g. 80-98% indium and 2-20% bismuth) or an alloy of bismuth and tin (e.g. 30-50% bismuth, 50-70% tin), all percentages given being by weight.

Since the metal layer softens and deforms, the screening performance of the screened tube with respect to the enclosed cable or cable bundle is constant regardless of the diameter of the cable or bundle, between the expanded diameter and the fully recovered diameter. The screening performance which can be expected is in excess of 100 db isolation per metre.

We have further devised a method of forming a heat shrinkable tube which includes a layer of electrically conductive metal, which method overcomes difficulties in applying a layer of such metal over the inner surface of a tube of substantial length.

Thus, also in accordance with this invention, there is provided a method of forming a heat shrinkable tubular article which includes a layer of electrically conductive metal, comprising applying a layer of electrically conductive metal over the outer surface of a first heat shrinkable tube prior to expansion, applying a second heat shrinkable tube over the first tube and then expanding the two tubes together so as to form a recoverable tubular article.

Preferably the second tube is initially greater in diameter than the inner tube with applied metal coating, but is then recovered to embrace the metal layer before the two tubes are expanded together.

The conductive metal may be of the type described above and may be applied to the first tube by any of the techniques described in our U.K. patent specification No. 2 188 197, or by electrophoresis.

Whatever the construction of the heat shrinkable article, it may have a cross-section which is circular or of any other desired shape.

The invention is not limited as regards the thickness of the metal layer and this may vary to suit the particular applications of use. For example, with metals as described above, the layer may be relatively thick, say greater than 2.0mm, yet still soften and deform without significantly resisting the recovery forces. Instead, the layer may be less than 0.2mm in thickness and still provide adequate screening performance. More typically however, the layer might have an intermediate thickness of 0.2 to 2.0mm.

An embodiment of this invention will now be described by way of example only and with reference to the accompanying drawings, in which:

FIGURE 1 is a cross-section through a heat shrinkable tube in accordance with this invention; and

FIGURE 2 is a section on the line II-II of Figure 1.

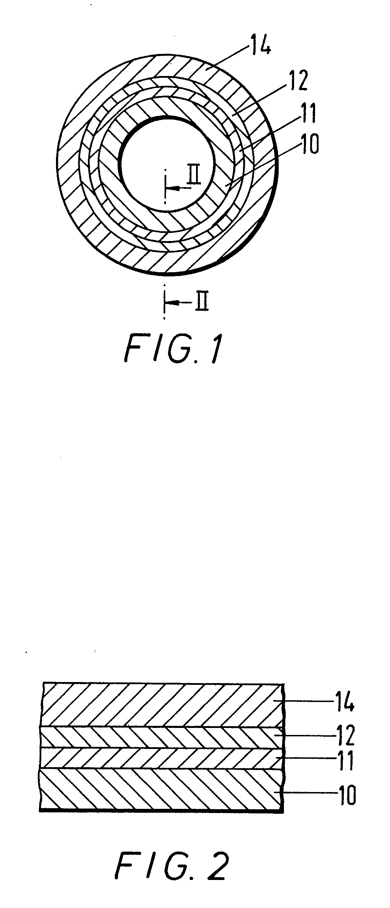

Referring to Figure 1, there is shown a heat shrinkable tube which includes an electrically conductive layer of metal. The tube comprises a first or inner tube 10 provided with the conductive layer 12 on its outer surface, and a second or outer tube 14 surrounding the conductive layer 12. The overall tube is heat shrinkable and will recover (or shrink in diameter) in response to the application of heat.

In order to make the heat shrinkable tube shown in Figure 1, firstly the tube 10 is taken prior to expansion and the metal layer 12 is applied to this tube 10 over the outer surface of the latter. In order to assist adherence of the metal layer to the tube 10, a thin layer 11 of meltable adhesive (e.g. polyvinylacetate) is applied to the outer surface of tube 10 and then the metal is deposited by e.g. spraying or electrophoresis. The metal of this layer may comprise, for example, one of the alloys mentioned above. Next the second or outer tube 14 is applied, being of greater diameter than the outer diameter of the metal layer 12. Then heat is appied to the tube 14 to cause it to shrink into embracing relationship with the metal layer. Finally, the overall tube 10,11,12,14 is expanded in accordance with known techniques to form a product which can later be shrunk or recovered, through the application of heat about the desired substrate.

The composite tube 10,11,12,14 may be made to any desired length and to any desired cross-sectional shape or variation in cross-section and profile along its length.

As described above, the composite tube may be applied and recovered around a cable or cable bundle (as in a cable harness) and will form a reliable and uniform screen.

## Claims

(1) A method of forming a heat shrinkable tubular article which includes a layer of electrically conductive metal, comprising applying a layer of electrically conductive metal over the outer surface of a first tube prior to expansion, applying a second tube over the first tube and then expanding the two tubes together so as to form a recoverable tubular article.

(2) A method as claimed in claim 1, in which the second tube is initially of greater inner diameter than the first tube with applied metal layer and the second tube is heat-recovered to embrace the metal layer before the two tubes are expanded together.

(3) A method as claimed in claim 1 or 2, in which said metal layer comprises a continuous coating which deforms without cracking during recovery of the article so that after recovery the coating remains continuous and adhered to said surface of the tube.

(4) A method as claimed in claim 3, in which said metal exhibits a broad melting point so that the metal softens without fully melting at the recovery temperature of the tube.

FIG.1

FIG. 2

| | **DOCUMENTS CONSIDERED TO BE RELEVANT** | | EP 89301111.4 |
|---|---|---|---|
| Category | Citation of document with indication, where appropriate, of relevant passages | Relevant to claim | CLASSIFICATION OF THE APPLICATION (Int. Cl.4) |
| D,A | GB - A - 2 188 197 (BOWTHORPE-HELLERMANN) <br> * Abstract * <br> -- | 1-4 | H 01 R 13/658 |
| A | GB - A - 2 113 022 (RAYCHEM) <br> * Claims 22-26 * <br> -- | 1 | |
| A | US - A - 4 555 422 (NAKAMURA) <br> * Column 5, lines 38-49 * <br> -- | 1 | |
| A | US - A - 4 525 261 (HOTTA) <br> ---- | | |

|  | TECHNICAL FIELDS SEARCHED (Int. Cl.4) |
|---|---|
|  | H 01 R <br> H 02 G |

The present search report has been drawn up for all claims

| Place of search | Date of completion of the search | Examiner |
|---|---|---|
| VIENNA | 18-04-1989 | SCHMIDT |